# EUROPEAN PATENT APPLICATION

(11) **EP 1 533 279 A1**
(43) Date of publication of application: **25.05.2005**
(21) Application number: 04078110.6
(22) Date of filing: 11.11.2004
(51) Int. Cl.: C02F 11/12

(54) **Device for processing biomass and method applied thereby**

(30) Priority: 19.11.2003 BE 200300620
(71) Applicant: Biosolidair, 3020 Herent (BE)
(72) Inventor: Puttaert, Emiel, 2890 Stint-Amands-Lippelo (BE); Tize, Ronald, 2920 Kalmthout (BE); Goemans, Marcel, 3360 Bierbeek (BE); Vriens, Luc, 3140 Keerbergen (BE)
(74) Representative: Donné, Eddy

(57) **Abstract**

Device for processing biomass, which at least consists of a drier-granulator which is provided with means for treating the gases which are created during the drying in the drier-granulator, which means are provided in a gas pipe starting from a drier-granulator, characterised in that in the gas pipe (54), upstream of the above-mentioned means (4), is provided a heater (55) for the above-mentioned gases.

## Description

The present invention concerns a device for processing biomass, more particularly a device for drying and granulating biomass.

Devices are known for drying and granulating biomass, whereby use is made of what is called a drier-granulator.

Such a known drier-granulator mainly comprises a number of heated plates on top of which is each time provided a spreader.

The biomass to be dried is hereby moved over the different plates by means of the above-mentioned spreaders, as a result of which round, dry granules are obtained which are carried off at the bottom of the drier-granulator to a separation means where granules are separated on the basis of their diameter.

Granules having a diameter which is smaller than a preset value are transported from the separation means to a mixing device, provided on top of the drier-granulator and in which the granules are coated with a layer of fresh biomass, after which the granules are put in the drier-granulator again.

Further, the known drier-granulator is also provided with means for treating the gases that are created as the biomass dries.

These known means mainly consist of a pipe onto which are successively provided a filter, a first condenser, a second condenser and an incineration device.

A disadvantage of this device is that the drier-granulator has to be heated as a whole, for example up to about 140°C, in order to make sure that the gases leave the drier-granulator entirely dry.

For damp gases may give rise to condensation and dust deposit in the above-mentioned pipe and even to the formation of a lime-like deposit of biological sludge in the condensers, possibly resulting in a complete loss of their efficiency.

Another disadvantage of maintaining the drier-granulator at a high temperature is that the device will not be optimally efficient, so that more energy will have to be consumed per volume of biomass to be dried, such that the operational cost is relatively high.

Another disadvantage of this device is the positioning of the mixing device on top of the drier-granulator, as a result of which the mixing device is not easily accessible.

Another disadvantage, linked thereto, is that the separated granules have to be transported to the top of the drier-granulator in a dry condition.

As the granules are surrounded by relatively much dust in their dry condition, before being separated on size, the risk of spontaneous combustion and fire spreading during transport is large, a fire hazard which increases as the temperature of the granules rises and which regularly causes serious problems in the known devices.

In order to limit this fire hazard in the known devices, all spaces in which transport means for dry granules are situated are equipped with a nitrogen injection which makes it possible to remove all oxygen from these spaces in case of fire.

The present invention aims to remedy one or several of the above-mentioned and other disadvantages.

To this end, the invention concerns a device for processing biomass which at least consists of a drier-granulator which is provided with means for treating the gases which are created during the drying in the drier-granulator, which means are provided with a gas starting from a drier-granulator, characterised in that in the gas pipe, upstream of the above-mentioned means, is provided a heater for the above-mentioned gases.

An advantage of this device according to the invention is that the drier-granulator can work at a lower temperature and that the dry gases can be carried off to the means for treating them as they are overheated in the heater.

The lower temperature in the drier-granulator still allows to dry the granules, but with a relatively low energy supply, as a result of which the efficiency of the drier-granulator is relatively high and the operational cost of the drier-granulator is rather low.

The lower temperature which can be applied in the drier-granulator according to the invention moreover reduces the risk of spontaneous combustion of the granules during further processing.

The drain for granules from the drier-granulator is preferably connected, via a means for separating granules on the basis of their size, to a mixing device situated next to the drier-granulator, preferably even at ground level.

An advantage of this preferred embodiment is that the distance over which the dry granules have to be transported from the drier-granulator is relatively short, as a result of which the fire hazard is minimized.

When the mixing device is moreover positioned under the separation means, the distance between these means and the mixing device can be limited, and, consequently, the fire hazard can be excluded practically entirely.

For, in this embodiment according to the invention, the distance over which hot and dry granules have to be transported in a dusty environment is strongly limited.

An advantage linked thereto is that only a small part of the device has to be provided with nitrogen injectors, which is advantageous for the cost price of the device.

The present invention also concerns a method for processing biomass, whereby a device according to the invention as described above can be applied, which method mainly consists of successively drying biomass in a drier-granulator; carrying off the gases which are created in the drier-granulator; and further treating the discharged gases, characterised in that these gases are overheated in a heater.

In order to better explain the characteristics of the invention, the following preferred embodiments of the device according to the invention and of the method for processing biomass according to the invention are given as an example only without being limitative in any way, with reference to the accompanying drawings, in which:
figure 1 schematically represents a device according to the invention;
figure 2 represents the part indicated by F2 in figure 1;
figure 3 represents the same part as in figure 2, but according to a variant;
figure 4 represents a variant of a device according to the invention.

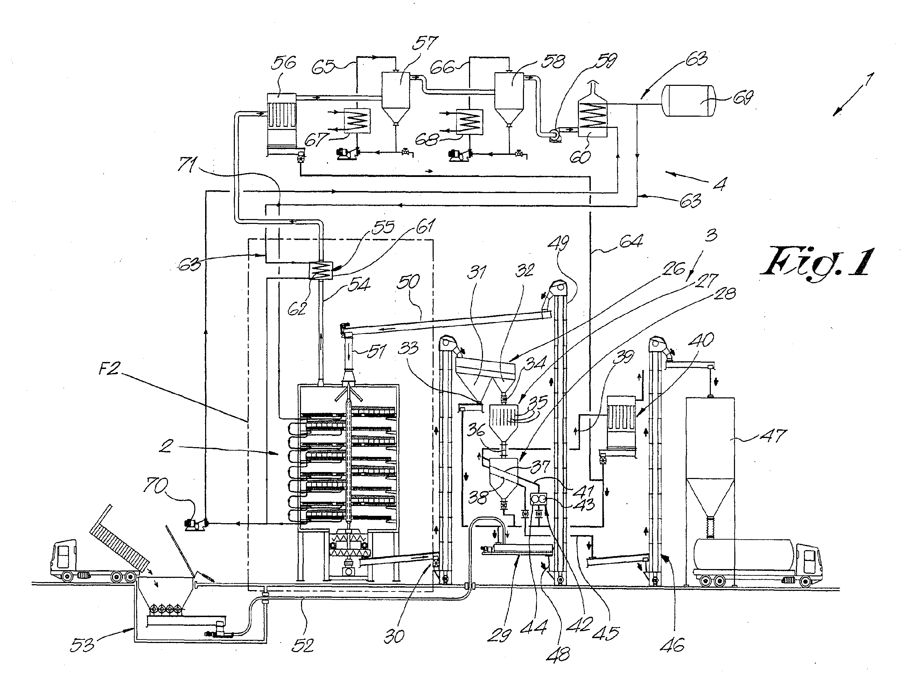

Figure 1 schematically represents a device 1 according to the invention, which is mainly composed of a known drier-granulator 2, a processing unit 3 for the dried biomass, and means 4 for treating gases created during the drying in the drier-granulator 2.

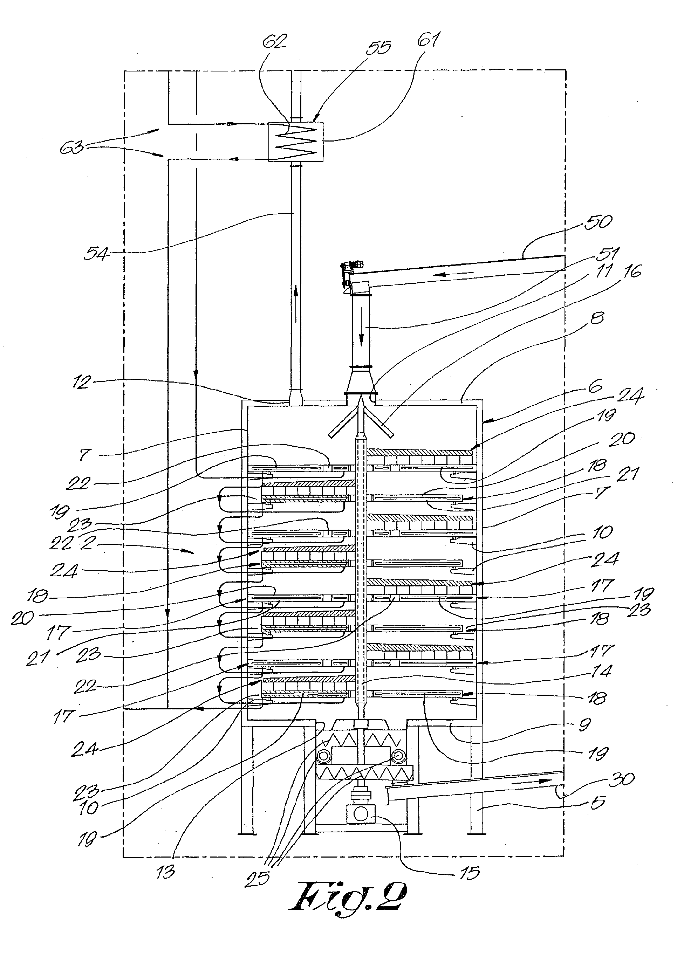

The drier-granulator 2, which is represented to a larger scale in figure 2, is known for example from Belgian patent No. 1,013,426 and mainly consists of a bearing structure 5 in which is suspended an air-tight housing 6 which is composed of a cylindrical casing 7, a cover plate 8 and a bottom plate 9.

On the bearing structure 5 are provided different supporting structures 10 at regular mutual distances, which extend through the casing 7 in the direction of the centre of the drier-granulator 2.

In the cover plate 8 of the drier-granulator 2 are provided two passages 11-12, one of which in a central manner, whereas a single relatively large central passage 13 is provided in the bottom plate 9.

Through the above-mentioned passage 13 in the bottom plate 9 is provided a rotatable shaft 14 which extends over at least the entire length of the drier-granulator 2.

This shaft 14 is provided, in this case, with drive means 15 on one far end, and on its other far end it is fixed to the roof 8 of the drier-granulator 2 in a rotating manner, whereby what is called a distribution cone 16 is provided over the shaft 14 which is fixed tightly to the roof 8.

Around the central shaft 14 are provided, on the above-mentioned supporting structures 10, a number of plates 17-18, on top of each other with a mutual distance of at least some 700 mm.

These plates 17-18 are all made double-walled, with a cavity 19 between both walls 20-21, and they alternately have a large and a small diameter, whereby the large plates 17 have a diameter which is practically equal to the inner diameter of the above-mentioned housing 6, whereas the small plates 18 have a diameter which is considerably smaller than the inner diameter of the housing 6.

Further, the above-mentioned large plates 17 have different passages 22 near their centre, whereas between the small plates 18 and the housing 6, there is a ring-shaped opening 23.

Above every plate 17-18, and preferably also above the distribution cone 16, are provided spreaders 24 which are fixed on the above-mentioned shaft 14.

Under the housing 6, more particularly under the central passage 13 in the bottom plate 9, are provided, as is known, different conveyor screws 25 which are situated two by two in a parallel manner around the central shaft 14.

The processing unit 3 for the dried biomass mainly consists of separation means 26, under which are positioned a cooler 27, a sieve device 28 and a mixing device 29.

Some conveyor means 30, for example a conveyor screw, what is called an intermediate wheel lock and/or a chain elevator, are sealed air-tight from the environment and are situated with one far end under the above-mentioned conveyor screws 25 of the drier-granulator 2 and with their other far end on the input of the separation means 26.

The separation means 26, in this case a separation silo, consist, as is known, of two compartments 31-32 which each comprise a separate and controllable drain 33-34 in the shape of a dose-measuring screw or the like.

The above-mentioned cooler 27 is situated exactly under the drain 34 of the second compartment 32 of the separation means 26.

This cooler 27 consists, in this case, of a space in which a few vertical plates 35 are provided parallel to each other, which plates 35 are made double-walled, with a central cavity, which is not represented in the figures.

At the bottom of the cooler 27 is provided a drain 36 which coincides with the supply of the device 28.

This sieving device 28 comprises, as is known, two inclined vibrating sieves 37-38. Above each of these vibrating sieves 37-38 is provided an exhaust pipe 39 for dust, which pipes 39 open in a dust filter 40, in this case a bag-type filter.

On the lower end, in the extension of the topmost vibrating sieve 37, is provided a conveyor means 41, for example a fall pipe and/or conveyor screw, which opens in what is called a crusher 42, which as is known consists of two parallel and rotatable rollers 43-44 which are situated against each other.

On the lower end of the bottommost vibrating sieve 38 is also provided a fall pipe, a conveyor screw 45 or the like, preceded by a circuit-isolating wheel lock which is not represented in the figures, which opens in a bucket elevator 46 this time to carry up the dried granulates, and which is provided with a drain to a storage bin 47.

The drain 33 of the first compartment 31, the drain of the crusher 42 and the drain of the sieving device 28 are all provided with a conveyor screw or the like which is provided by a wheel lock in the case of the crusher 42 and the sieving device 28 and, either or not, a fall pipe, which above-mentioned conveyor screws all open in the above-mentioned mixing device 29.

The mixing device 29 comprises a drain 48 situated exactly above the lower end of a second bucket elevator 49, which bucket elevator 49 is connected to a conveyor screw 50 or the like at its top end, which conveyor screw 50 is in turn connected to a fall pipe 51 which is fixed with its free end to the above-mentioned central passage 11 in the cover plate 8 of the drier-granulator 2.

Further, the mixing device 29 is also provided with a supply pipe 52 for fresh biomass to be treated coming, for example, from a device 53 for the mechanical pre-drying of biomass, known as such by the professional.

The means 4 for treating gases are provided in a gas pipe 54 which is fixed with one far end in the above-mentioned passage 12 in the cover plate 8 of the drier-granulator 2.

This gas pipe 54 according to the invention is equipped with a heater 55 and, as is known, successively with a dust filter 56, in this case a bag-type filter, a first condenser 57, a second condenser 58, an extraction fan 59 and a combustion chamber 60.

The heater 55 is in this case a known heat exchanger, consisting of a housing 61 through which one or several pipes 62 extend, which are part of a heating circuit 63.

The dust filter 56 is provided with a drain 64 for dust, in the shape of a fall pipe or a conveyor screw or the like, which opens in the above-mentioned mixing device 29.

Such a drain is also provided for the above-mentioned dust filter 40, whereby, in this case, said drain of the dust filter 40 is part of the above-mentioned drain 64.

Both above-mentioned condensers 57-58 are equipped with a recirculation pipe 65-66 which is provided with a heat exchanger 67, 68 respectively.

The above-mentioned heating circuit 63 in this case mainly consists of an oil storage tank 69 and a pump 70.

The heating circuit 63 successively runs through the combustion chamber 60 and the cavities 19 in the different double-walled plates 17-18 in the drier-granulator 2.

Further, the heating circuit 63 comprises a branch 71 which is connected to the pipes 62 in the heater 55.

The working of this device according to the invention for processing biomass is simple and as follows.

The biomass to be processed is supplied via the device 53 for the mechanical pre-drying of biomass, where this biomass is partly dehydrated and is subsequently conveyed to the mixing device 29.

In this mixing device 29, the fresh biomass is mixed with dry granules of biomass which has already been processed, as a result of which these granules are coated with a layer of biomass to be dried.

The coated granules are then supplied to the drier-granulator 2 via the bucket elevator 49 and a conveyor screw 50 or the like, where the coated granules are evenly distributed over the top plate by the distribution cone 16 and the rotatable spreaders provided on it, and they are then moved over the different plates 17-18 in the known manner, by means of the spreaders 24 which rotate together with the shaft 14.

By pumping hot thermal oil, for example of 240 to 265°C (degrees Celsius) through the cavities 19 while the granules are being moved over the plates 17-18, the layer of biomass around the granules is dried.

The dried granules are discharged at the bottom of the drier-granulator 2 via the central passage 13 in the bottom plate 9, after which they are carried to the conveyor means 30 by means of the conveyor screws 25.

The granules which are discharged at the bottom of the drier-granulator 2 hereby have a temperature of 105 to 110°C in this case.

The above-mentioned conveyor means 30 move the dried granules to the separation means 26, where the granules are separated in the known manner on the basis of their diameter.

Granules having a size which is equal to or larger than a predefined size end up in the second compartment 32 of the separation means 26, whereas smaller granules stay behind in the first compartment 31.

The granules whose diameter is too small, which stay behind in the first compartment 31, are carried back to the mixing device 29, where they are given an additional coating.

The granules from the second compartment 32 on the other hand, end up in the cooler 27 via the drain 34 of this compartment 32, where the granules drop due to the gravitational force between the plates 35.

The plates 35 of the cooler 27 are in this case fed with cooling water in order to cool the granules to a temperature of preferably less than 40°C.

Next, the cooled granules are sieved by means of the top vibrating sieve 37, having a pore size which is somewhat larger than the required granular size.

The granules which stay behind on the sieve are discharged to the crusher 42, where they are crushed between two rollers 43-44 rotating in the opposite sense, and they are discharged to the mixing device 29.

The granules which are retained by the lower vibrating sieve 32, whose pore size is just somewhat smaller than the predefined granular dimensions, are discharged to the storage bin 47 by means of among others a bucket elevator 46.

Finally, the granules which also fall through the lower vibrating sieve 32, are carried back to the mixing device 29, where they are coated again and can resume a new drying cycle.

The dust which is created in the sieving device 28 is exhausted via the pipe 39, which is provided with the bag-type filter 40, in which the dust from the air is purified and is discharged to the above-mentioned mixing device 29.

The gases created in the drier-granulator 2 while the biomass is being dried are exhausted through the pipe 4 by means of the extraction fan 59.

These gases, having a temperature of some 105 to 110°C, are first overheated in the heater 55 up to a temperature of for example 140°C.

At this temperature, the gases are completely dry and they can be sent through the dust filter 56 without any complications, whereby dust from the gases is possibly removed.

This dust is then preferably carried back'to the mixing device 29.

Next, the dust-free gases are cooled to a temperature of, in this case some 80°C by means of a direct condenser 57, whereby the condensate is cooled by means of the heat exchanger 67. The heat which is abstracted from this condensate can for example by used to indirectly heat water which can be used, among others, for a central heating.

Further cooling of the gases to some 50°C is possible in a second condenser 58, which is also equipped with a heat exchanger 68.

Finally, the gases which cannot be condensed, are burnt entirely or practically entirely in the combustion chamber 60.

The thermal oil is sent through the combustion chamber 60 via the heating circuit 63 and heated up to a temperature of for example 240 to 265°C.

As already mentioned, the hot thermal oil is forced through the cavities 19 in the double-walled plates 17-18 and, via a branch 71 of the heating circuit 63, also through the pipes 62 of the heater 55.

Of course, for this application it is possible to replace the thermal oil by another heat-conducting fluid, such as for example steam, whereby vent lines are then preferably provided in the heating circuit 63 and in the heated plates 17-18, which vent lines are not represented in the figures.

Further, it is also indicated for this device according to the invention to provide at least the closed space in which the conveyor means 30 are situated with a nitrogen injection, in order to extinguish or prevent a possible fire in these conveyor means 30. it is not excluded hereby to make the separation means 26, the cooler 27, the bucket elevator 46 and the storage bin 47 air-tight as well and to provide them with a nitrogen injection.

In this manner, granulates are obtained in an advantageous manner by means of a device 1, whereby the heater 55, as is clearly indicated in the figures, has a small volume in relation to the drier-granulator 2, so that heating this heater 55 up to a high temperature is energetically more efficient than heating the entire drier-granulator 2 up to the same temperature.

Further, it should be noted that the mixing device 29 is situated at ground level, next to the drier-granulator 2, such that the distance over which the dried granules have to be conveyed can be significantly reduced in comparison to the known devices, whereby the mixing device is situated on top of the drier-granulator.

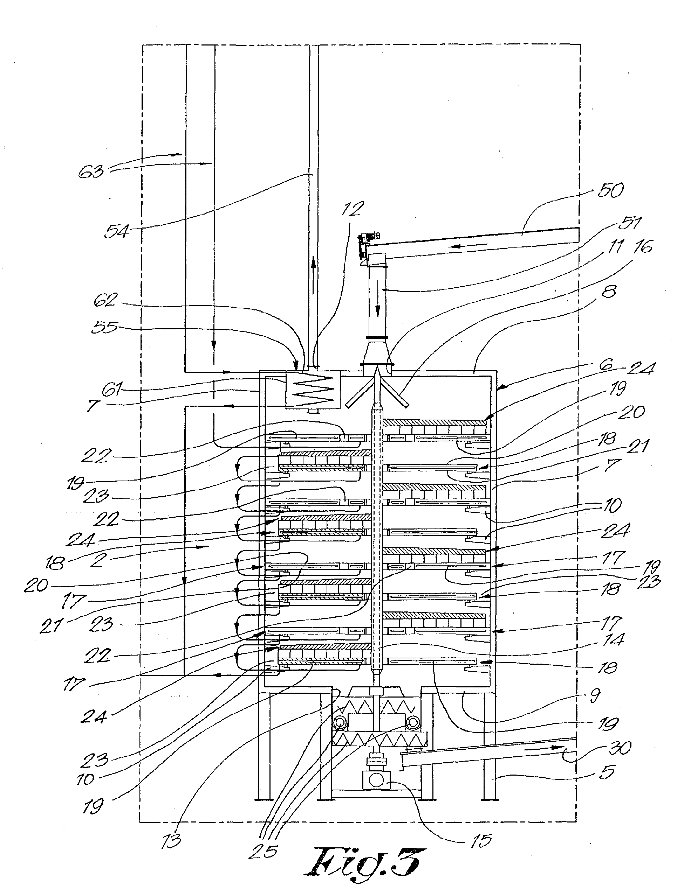

In a variant of this embodiment, which is represented in figure 3, the heater 55 is provided inside the housing 6 of the drier-granulator 2, such that it is possible, for example, to save on insulation for the heater 55.

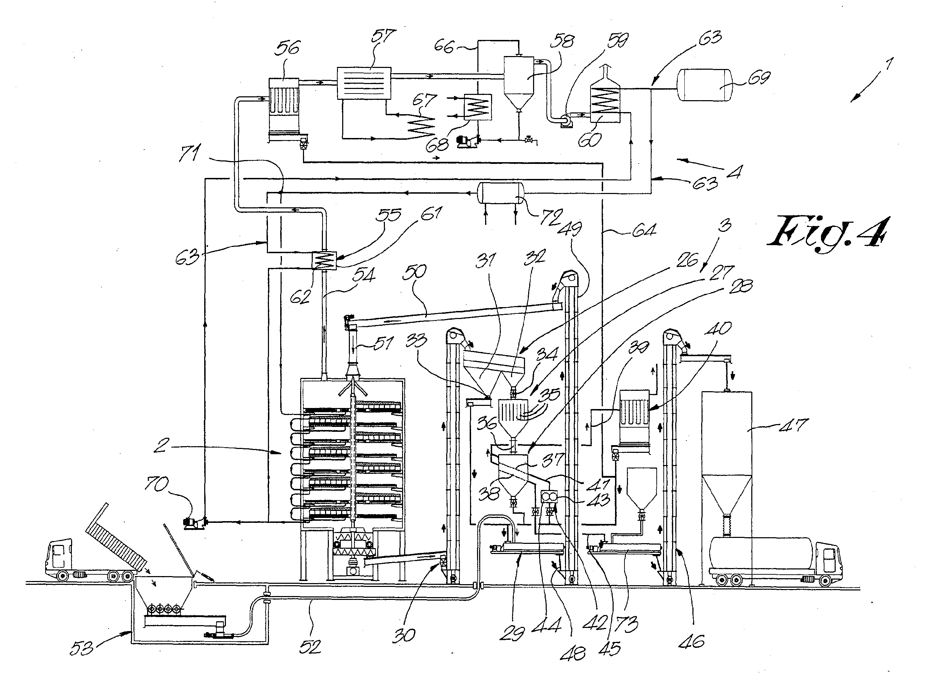

Figure 4 represents another variant of the device 1 according to the invention, whereby the heating circuit 63 is equipped with an emergency cooler 72, in this case a known and fast working air/oil cooler, which can be used, for example, to shut down the device 1.

Further, in this latter variant, the first direct condenser 57 is replaced by an indirect condenser.

Next, it should be noted that it is always possible to recirculate the gases from the drier-granulator 2 so as to use their residual heat to heat up the drier-granulator 2 or to maintain its temperature. To this end, one only has to provide a branch in the pipe 54, for example following the dust filter 56 or following the extraction fan 59, which branch is not represented in the figures and which opens in the drier-granulator 2.

The latter branch is preferably equipped with a compressor, which is not represented in the drawings, to compress the gases.

Said compression of the above-mentioned gases is advantageous in that the gases partly condense, such that the gases will be injected in the drier-granulator 2 in a relatively dry condition, as a result of which the granules in the drier-granulator 2 can give off relatively much moisture to the gas phase in the drier-granulator 2 and as a result of which the efficiency of the drier-granulator 2 is increased.

In the above-mentioned variant is provided, additionally, between the above-mentioned conveyor screw 45 and the bucket elevator 46 for the drain of dried granules to the storage bin 47, a coater 73 in which the granules can be coated with a mixture of additives, in order to obtain granules with a higher added value.

The present invention is by no means restricted to the embodiments of a device for processing biomass and the method applied thereby described as an example; on the contrary, such a device and method can be made according to different variants while still remaining within the scope of the invention.

## Claims

1. Device for processing biomass, which at least consists of a drier-granulator which is provided with means for treating the gases which are created during the drying in the drier-granulator, which means are provided in a gas pipe starting from a drier-granulator, **characterised in that** in the gas pipe (54), upstream of the above-mentioned means (4), is provided a heater (55) for the above-mentioned gases.

2. Device according to claim 1, **characterised in that** the heater (55) is situated outside the housing (6) of the drier-granulator (2).

3. Device according to claim 1, **characterised in that** the heater (55) is situated inside the housing (6) of the drier-granulator (2).

4. Device according to any of the preceding claims, **characterised in that** the heater (55) consists of a housing (61) through which one or several pipes (62) extend which are part of a heating circuit (63).

5. Device according to claim 4, **characterised in that** the heating circuit (63) is provided with an emergency cooler (72).

6. Device according to any of the preceding claims, **characterised in that** the above-mentioned means (4) for treating gases mainly consist of a dust filter (56), one or several condensers (57-58), an extraction fan (59) and a combustion chamber (60) for gases, which are provided in the above-mentioned gas pipe (54).

7. Device according to claim 6, **characterised in that** the above-mentioned gas pipe (54) contains a branch to the drier-granulator (2) after the dust filter (56).

8. Device according to claim 7, **characterised in that** the above-mentioned gas pipe (54) contains a branch to the drier-granulator (2) after the extraction fan (59).

9. Device according to any one of claims 7 or 8, **characterised in that** a compressor is provided in the above-mentioned branch of the gas pipe (54) to the drier-granulator (2).

10. Device according to any one of the preceding claims, **characterised in that** it is equipped with a processing unit (3) for the dried biomass, which processing unit (3) comprises at least a mixing device (29), whereby this mixing device (29) is positioned next to the drier-granulator (2).

11. Device according to claim 10, **characterised in that** the above-mentioned mixing device (29) is situated at ground level.

12. Device according to any one of claims 10 or 11, **characterised in that** the processing unit (3) further mainly consists of conveyor means (30), a separation means (26), a cooler (21), a sieving device (28), a first bucket elevator (46) with a drain to a storage bin (47), and a second bucket elevator (49) which is coupled to the drier-granulator (2), whereby at least the conveyor means (30) are provided in an air-tight or practically air-tight space which is provided with a nitrogen injection.

13. Device according to claim 12, **characterised in that** the separation means (26), the cooler (27), the first bucket elevator (46) and the storage bin (47) are made air-tight or practically air-tight and are provided with a nitrogen injection.

14. Device according to claim 12, **characterised in that**, between the sieving device (28) and the first bucket elevator (46) is provided a coater (73).

15. Method for processing biomass, whereby a device according to any one of the above-mentioned claims can be applied, which method mainly consists of successively drying biomass in a drier-granulator, draining the gases created in the drier-granulator, and further processing the discharged gases, **characterised in that** these gases are overheated in a heater (55).

16. Method according to claim 13, **characterised in that** the overheated gases are recirculated by successively deducting the gases in a dust filter (56); **in that** the gases are compressed in a compressor; **in that** these gases are injected in the drier-granulator (2).

17. Method according to any one of claims 13 or 14, **characterised in that** the dried granules are discharged to a processing unit (3) which provides for the separation of the granules according to size; the cooling of the granules having a diameter which is equal to or larger than a predefined value; the sieving of the granules; and the application of a coating on the obtained, sieved granules.
